Europäisches Patentamt

European Patent Office

Office européen des brevets

(11) Numéro de publication: **0 199 622**
**A1**

## (12) DEMANDE DE BREVET EUROPEEN

(21) Numéro de dépôt: 86400650.7

(22) Date de dépôt: 26.03.86

(51) Int. Cl.⁴: **G02B 26/02**

(30) Priorité: 03.04.85 FR 8505076

(43) Date de publication de la demande:
**29.10.86 Bulletin 86/44**

(84) Etats contractants désignés:
**CH DE GB IT LI**

(71) Demandeur: **Gentric, Alain**
**Kerwoezal**
**F-22660 Trelevern(FR)**

(72) Inventeur: **Gentric, Alain**
**Kerwoezal**
**F-22660 Trelevern(FR)**

(74) Mandataire: **Mongrédien, André et al**
**c/o BREVATOME 25, rue de Ponthieu**
**F-75008 Paris(FR)**

(54) Commutateur optique à fibres optiques de connexion mobiles.

(57) Commutateur optique à fibres optiques de connexion mobiles.

Ce commutateur comprend au moins une fibre
optique mobile (6) dont les extrémités sont destinées
à être respectivement connectées à deux fibres optiques de transmission (2, 4) et sont respectivement
pourvues de moyens de déplacement (8, 10),
chaque moyen de déplacement étant apte à occuper
une première position permettant la connexion entre
l'extrémité et la fibre de transmission qui correspondent à ce moyen de déplacement, et une seconde
position dans laquelle cette connexion est supprimée.

Application aux télécommunications optiques.

EP 0 199 622 A1

# FIG. 1A

## COMMUTATEUR OPTIQUE A FIBRES OPTIQUES DE CONNEXION MOBILES

La présente invention concerne un commutateur optique à fibres optiques de connexion mobiles. Elle s'applique notamment au domaine des télécommunications optiques.

On connaît déjà des commutateurs optiques utilisant la réflexion d'onde lumineuse en atmosphère libre. De tels commutateurs présentent l'inconvénient suivant : leur réalisation nécessite l'utilisation d'un grand nombre d'éléments de précision coûteux, à savoir des collimateurs et des moyens de déflexion optique tels que des miroirs ou des prismes. Par exemple, la réalisation d'un commutateur comportant N fibres optiques d'entrée et N fibres optiques de sortie nécessite NxN éléments mécaniques de déflexion et 2N collimateurs (N étant bien entendu un nombre entier au moins égal à un).

La présente invention a pour but de remédier à l'inconvénient précédent en proposant un commutateur optique qui utilise seulement le guidage d'ondes optiques, nécessite moins d'éléments de précision et a donc un coût moins élevé que les commutateurs connus.

De façon précise, la présente invention a pour objet un commutateur optique, caractérisé en ce qu'il comprend au moins une fibre optique mobile dont les première et seconde extrémités sont destinées à être respectivement connectées optiquement à deux fibres optiques de transmission et sont respectivement pourvues de moyens de déplacement, chaque moyen de déplacement étant apte à occuper une première position permettant la connexion entre l'extrémité et la fibre de transmission qui correspondent à ce moyen de déplacement, et une seconde position dans laquelle cette connexion est supprimée.

Le commutateur optique objet de l'invention présente les avantages suivants : il permet l'utilisation de plusieurs longueurs d'onde, est automatisable, peut être réalisé avec un grand nombre d'entrées et un grand nombre de sorties (cent entrées et cent sorties par exemple) par des techniques modulaires, et peut permettre de relier optiquement en un temps très court, deux fibres optiques de transmission, ce temps pouvant être inférieur à une vingtaine de millisecondes et de l'ordre de quelques millisecondes.

Dans les commutateurs optiques réalisés selon l'invention, la précision porte sur les connexions entre les fibres optiques mobiles et les fibres optiques de transmission. Ainsi, dans le cas d'un commutateur comportant N entrées et N sorties, la précision porte simplement sur 2N connexions, ce qui correspond bien à un nombre d'éléments de précision inférieur à celui qui est demandé pour les commutateurs connus.

Selon un mode de réalisation préféré du commutateur optique objet de l'invention, celui-ci comprend en outre au moins un sélecteur optique dans lequel s'effectue la connexion entre chaque fibre mobile et l'une des fibres de transmission.

Selon un mode de réalisation particulier du commutateur optique objet de l'invention, celui-ci comprend M groupes de N fibres optiques mobiles, M sélecteurs optiques destinés à être respectivement associés M fibres optiques de transmission et N autres sélecteurs optiques destinés à être respectivement associés à N autres fibres optiques de transmission, M et N étant des nombres entiers tels que M soit au moins égal à un et N au moins égal à M, chacun des M sélecteurs est associé aux premières extrémités des fibres optiques de l'un des M groupes et chacun des N autres sélecteurs est associé à la seconde extrémité de l'une des fibres optiques de ce groupe, de façon à pouvoir réaliser des liaisons optiques entre les M fibres de transmission et les N autres fibres de transmission.

Selon un autre mode de réalisation particulier, le commutateur optique objet de l'invention comprend un étage central et deux étages d'extrémité comportant chacun N commutateurs optiques élémentaires, chacun de ceux-ci comprenant N groupes de N fibres optiques mobiles, N sélecteurs et N autres sélecteurs, N étant un nombre entier au moins égal à un, chacun des N sélecteurs étant associé aux premières extrémités des fibres optiques de l'un des N groupes et chacun des N autres sélecteurs étant associé à la seconde extrémité de l'une des fibres optiques de ce groupe, chaque étage d'extrémité est de stiné à être connecté à un groupe de NxN fibres optiques de transmission, chaque commutateur élémentaire de l'étage central est relié, d'un côté correspondant à un étage d'extrémité, à N fibres optiques intermédiaires, et de l'autre côté correspondant à l'autre étage d'extrémité, N autres fibres optiques intermédiaires et chaque commutateur élémentaire de chaque étage d'extrémité est associé des fibres intermédiaires correspondant à des commutateurs élémentaires différents de l'étage central, de façon à pouvoir réaliser des liaisons optiques entre les deux groupes de NxN fibres optiques de transmission.

De préférence, chaque sélecteur comprend un embout évasé, destiné à recevoir la fibre optique de transmission correspondante, cet embout étant prolongé par un support creux, évasé sensiblement à partir de l'embout et pourvu intérieurement de guides définis par des cales, chaque guide contenant une fibre optique mobile et permettant le déplacement de celle-ci en vue de son raccord à la fibre optique de transmission.

De péférence également, au moins les extrémités de chaque fibre optique mobile sont revêtues d'au moins une couche de nitrure de titane.

Un tel revêtement confère aux extrémités de la fibre optique une grande résistance à l'usure au cours de leurs déplacements.

Enfin, selon un mode de réalisation préféré du commutateur optique objet de l'invention, chaque moyen de déplacement comprend :

-un électro-aimant fixe dont le noyau est pourvu d'un perçage axial, et

-un élément amagnétique apte à coulisser dans ce perçage et portant à ses extrémités deux aimants permanents présentant deux pôles de même nom en regard du noyau, la fibre optique mobile correspondante étant fixée à cet élément, lesdites positions correspondant à des excitations opposées de l'électro-aimant.

Il s'agit donc d'un moyen bistable fonctionnant en translation, qui autorise des temps de connexion extrêmement courts.

La présente invention sera mieux comprise à la lecture de la description qui suit, d'exemples de réalisation donnés à titre purement indicatif et nullement limitatif, en référence aux dessins annexés sur lesquels :

-les figures 1A à 1C sont des vues - schématiques d'un mode de réalisation particulier du commutateur optique objet de l'invention,

-la figure 2 est une vue schématique d'un mode de réalisation préféré des moyens de déplacement utilisés dans la présente invention,

-la figure 3 est une vue schématique d'un autre mode de réalisation particulier du commutateur optique objet de l'invention, comportant M entrées et N sorties,

-la figure 4 est une vue schématique d'un mode de réalisation particulier des sélecteurs utilisés dans la présente invention,

-la figure 5 est une vue de détail des sélecteurs représentés sur la figure 4,

-la figure 6 est une vue en coupe transversale de l'embout que comportent ces sélecteurs,

-la figure 7 est une vue en coupe transversale d'un support creux dont sont également pourvus ces sélecteurs,

-la figure 8 est une vue schématique d'un autre mode de réalisation particulier des sélecteurs utilisés dans l'invention,

-les figures 9 et 10 sont des vues en coupe transversale effectuée à différents niveaux de l'embout du sélecteur représenté sur la figure 8,

-la figure 11 est une vue schématique d'un autre mode de réalisation particulier des sélecteurs utilisés dans l'invention,

-la figure 12 est une vue en coupe transversale de l'embout dont sont pourvus les sélecteurs représentés sur la figure 11,

-la figure 13 est une vue schématique d'un mode de réalisation préféré des fibres optiques utilisées dans l'invention,

-la figure 14 est une vue de profil - schématique d'un commutateur selon l'invention, à 16 entrées et 16 sorties,

-la figure 15 est une vue de face du commutateur représenté sur la figure 14,

-la figure 16 est une vue schématique et partielle d'un système d'adressage matriciel permettant la commande des moyens de déplacement utilisés dans le commutateur représenté sur les figures 14 et 15,

-la figure 17 est une vue schématique et partielle d'une variante de ce système d'adressage, et

-la figure 18 est une vue schématique d'un autre mode de réalisation particulier du commutateur optique objet de l'invention, à NxN entrées et NxN sorties.

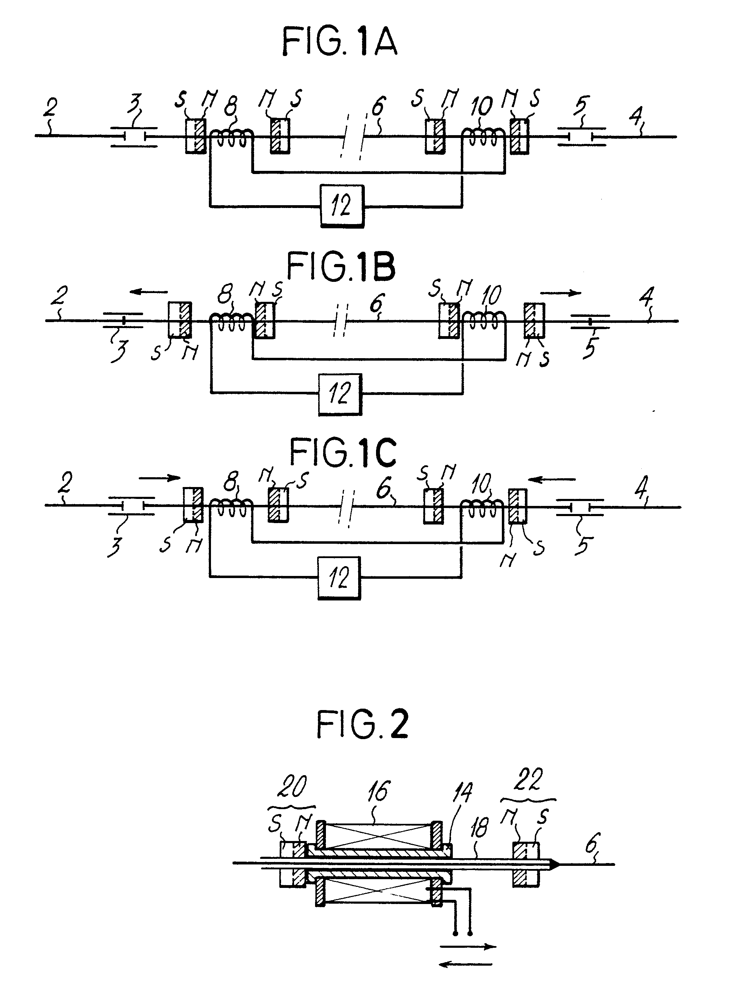

Sur les figures 1A à 1C, on a représenté - schématiquement un mode de réalisation particulier du commutateur optique objet de l'invention, qui permet d'établir une liaison optique entre une fibre optique d'entrée 2 et une fibre optique de sortie 4 et comporte à cet effet une fibre optique mobile 6 encore appelé "jarretière", dont la longueur est suffisante pour qu'elle puisse être respectivement connectée par ses extrémités aux deux fibres 2 et 4, (ceci étant également vrai pour la longueur des fibres optiques mobiles considérées par la suite, quant à leur connexion aux fibres de transmission qui leur sont associées). Lesdites extrémités sont respectivement munies de moyens de déplacement 8 et 10 qui peuvent être activés par des moyens de commande 12 pour réaliser la liaison entre les fibres d'entrée et de sortie par l'intermédiaire de la fibre mobile.

Sur la figure 2, on a représenté - schématiquement un mode de réalisation préféré d'un moyen de déplacement selon l'invention. Il s'agit d'un moyen bistable comportant un électro-aimant qui comprend un noyau en fer doux 14 entouré d'une bobine 16. Le noyau 14 est pourvu d'un perçage parallèle à son axe. Une portion de l'extrémité correspondante de la fibre optique mobile 6 est fixée dans un tube capillaire 18 amagnétique par exemple en matière plastique, qui est apte à coulisser dans le perçage du noyau 14. Le tube 18 a une longueur supérieure à celle du noyau et deux aimants permanents 20 et 22 sont fixés aux extrémités dudit tube de telle manière que ces aimants présentent deux pôles de même nom, par exemple les pôles nord N, en regard du noyau 14.

En partant d'une position du tube 18 dans laquelle l'un des aimants, par exemple l'aimant référencé 20, est au contact du noyau 14, l'électro-aimant n'étant pas activé, on applique aux bornes de la bobine une tension électrique telle que l'extrémité du noyau située en regard de l'aimant 20 devienne un pôle nord. L'aimant 20 est alors repoussé tandis que l'aimant 22 est attiré par l'autre extrémité du noyau qui est alors une face sud. Par conséquent, le tube 18 et donc la fibre optique 6 sont déplacés en translation. L'état alors obtenu pour le moyen de déplacement représenté sur la figure 2 est stable, c'est-à-dire que l'aimant 22 demeure au contact du noyau 14 même lorsque la bobine n'est plus excitée.

Lorsqu'une tension électrique opposée à la précédente est appliquée aux bornes de la bobine, l'extrémité du noyau située en regard de l'aimant 22 devient une face nord et repousse cet aimant 22 alors que l'aimant 20 est attiré par l'extrémité correspondante du noyau, qui est alors une face sud. Par conséquent, le tube 18 et donc la fibre optique 6 se déplacent en translation dans le sens inverse du sens précédent. L'état alors obtenu pour le moyen de déplacement représenté sur la figure 2 est également stable puisqu'il subsiste même lorsque l'excitation de la bobine est supprimée.

Les bobines des moyens de déplacement représentés sur les figures 1A à 1C sont fixées à des supports non représentés. Partant d'une position dans laquelle les aimants qui sont respectivement en regard des fibres 2 et 4 sont au contact de leurs noyaux respectifs (figure 1A), les bobines des moyens de déplacement sont simultanément activées de manière que les extrémités de la fibre optique mobile 6 se déplacent simultanément et viennent respectivement au voisinage des extrémités associées des fibres 2 et 4. A cet effet, lesdites bobines peuvent être montées en série - (d'une manière appropriée à l'obtention du fonctionnement souhaité), les moyens de commande étant prévus pour appliquer une tension convenable aux bornes du montage électrique résultant - (figure 1B) et l'on peut prévoir des moyens 3 et 5 tels que des tubes capillaires fixes et de diamètre approprié, dans lesquels les extrémités des fibres 2 et 4 sont respectivement placées et les extrémités de la fibre 6 peuvent respectivement coulisser.

Lorsque la tension électrique inverse de la précédente est appliquée au montage, les extrémités de la fibre optique 6 s'écartent simultanément des fibres 2 et 4 qui leurs sont associées et les connexions optiques sont interrompues - (figure 1C).

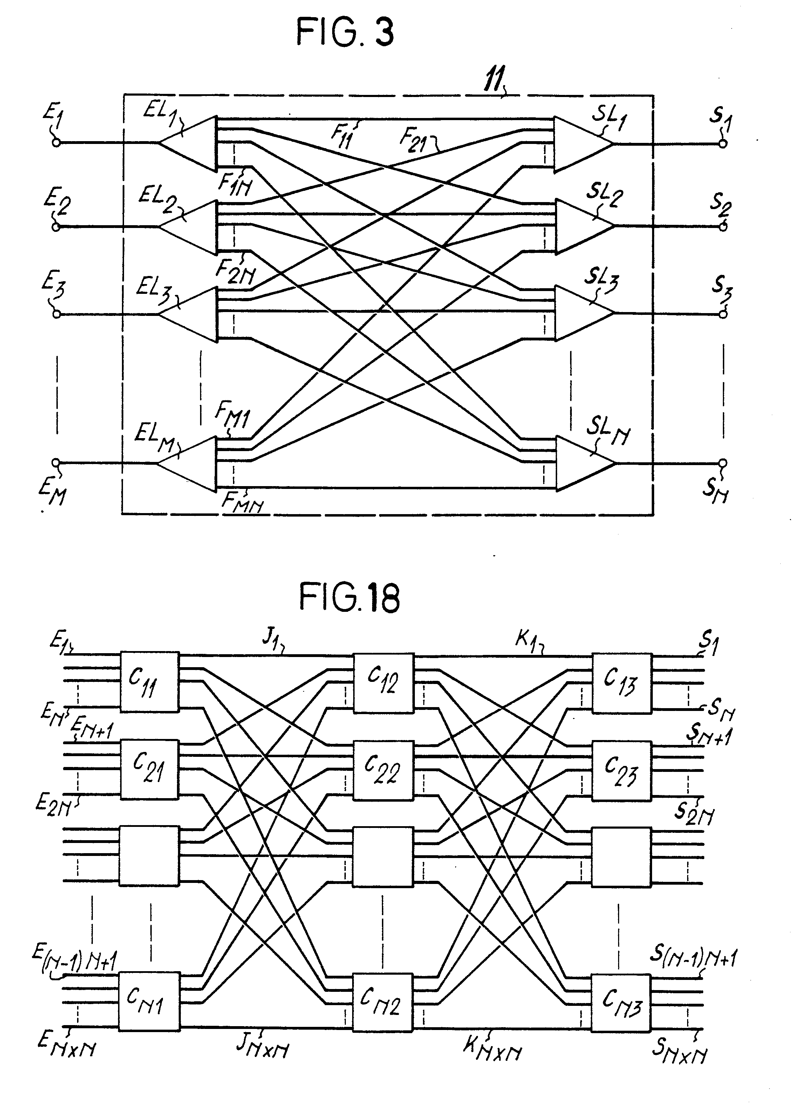

Sur la figure 3, on a représenté - schématiquement un autre mode de réalisation particulier du commutateur optique objet de l'invention, permettant de réaliser des liaisons optiques entre M fibres optiques de transmission respectivement référencées $E_1$, $E_2$, ..., $E_M$ et N autres fibres optiques de transmission respectivement référencées $S_1$, $S_2$, ..., $S_N$. Les nombres M et N sont des nombres entiers au moins égaux à 1 et le nombre N est supposé au moins égal au nombre M. Dans l'exemple représenté sur la figure 3, les nombres M et N sont supposés égaux, à 4 par exemple. Les M fibres optiques sont par exemple les fibres d'entrée du commutateur représenté sur la figure 3, tandis que les N autres fibres optiques en sont les fibres de sortie. Un tel commutateur est appelé "commutateur MxN".

Le commutateur 11 schématiquement représenté sur la figure 3 comprend également un premier étage de M sélecteurs $EL_1$, $EL_2$ ..., $EL_M$ correspondant respectivement aux fibres $E_1$, $E_2$ ..., $E_M$ ainsi qu'un second étage de N sélecteurs $SL_1$,

$SL_2$, ..., $SL_N$ correspondant respectivement aux fibres $S_1$, $S_2$, ..., $S_N$. Il comprend également M groupes $G_1$, ..., $G_M$ de N fibres optiques mobiles $F_{11}$, ..., $F_{1N}$, $F_{21}$, ..., $F_{2N}$, ..., $F_{M1}$, ..., $F_{MN}$. Les fibres optiques $F_{i1}$, ..., $F_{iN}$ du groupe $G_i$, i variant entre 1 et M, ont l'une de leurs extrémités qui est associée au sélecteur $EL_i$ tandis que les autres extrémités respectives de ces fibres sont respectivement associées aux sélecteurs $SL_1$, ..., $SL_N$ comme on le voit sur la figure 3. Chaque sélecteur, dont la structure sera donnée par la suite, permet l'établissement d'une connexion optique entre la fibre optique de transmission qui lui correspond et l'une des fibres optiques mobiles qui lui sont associées.

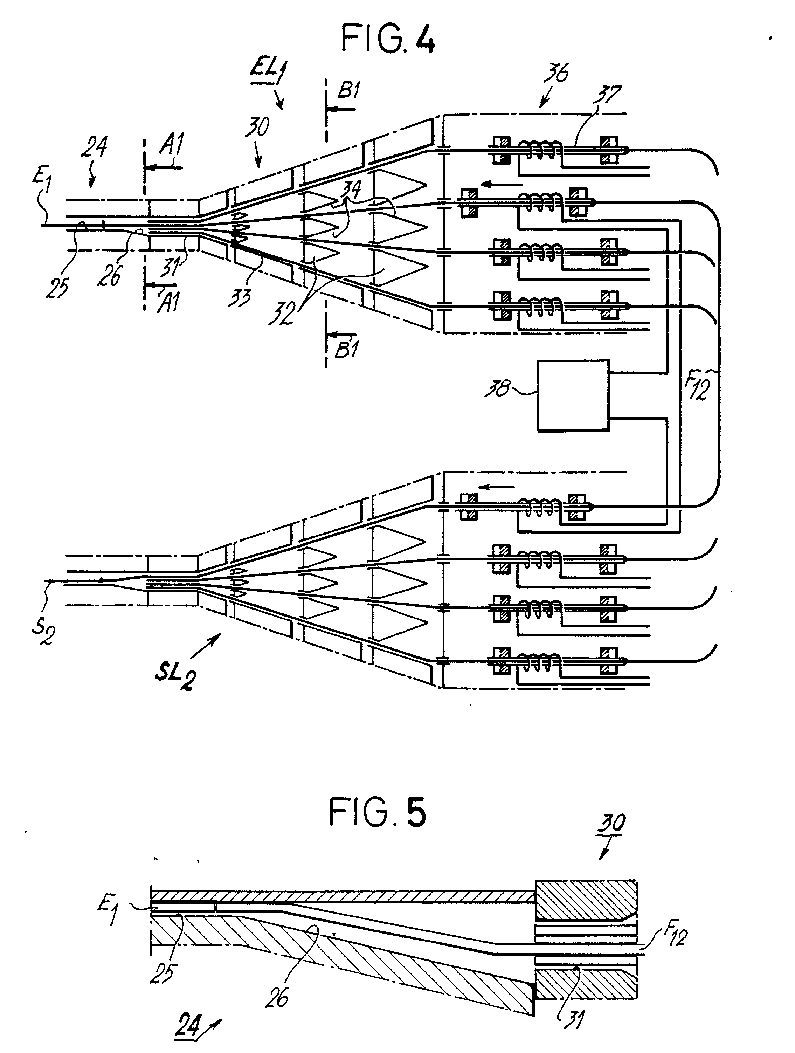

Sur la figure 4, on a représenté - schématiquement un mode de réalisation particulier des sélecteurs utilisés dans l'invention. Deux de ces sélecteurs, par exemple les sélecteurs $EL_1$ et $SL_2$ mentionnés dans la description de la figure 3, sont représentés sur la figure 4. Les sélecteurs $EL_1$ et $SL_2$ permettent d'établir une liaison optique entre la fibre d'entrée $E_1$ et la fibre de sortie $S_2$ par l'intermédiaire d'une fibre optique mobile ou "jarretière" $F_{12}$ faisant partie du groupe associé au sélecteur $EL_1$.

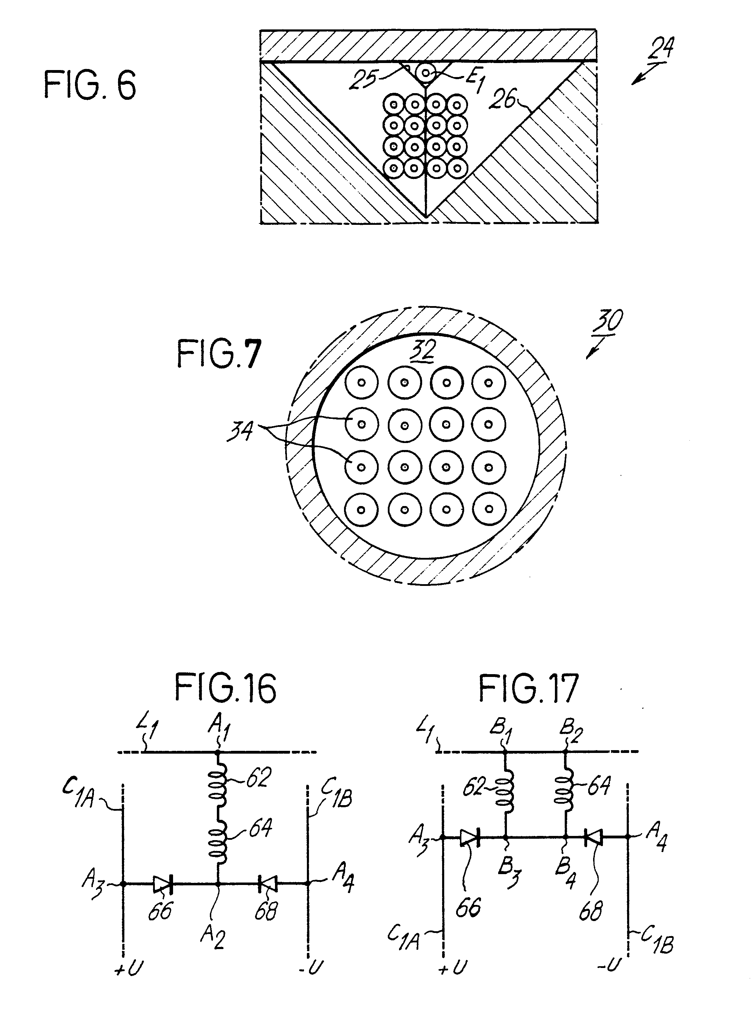

Chaque sélecteur comprend un embout de connexion 24 muni intérieurement d'une portion 25 de section transverse constante, formant un vé de positionnement destiné à recevoir et à maintenir la fibre optique de transmission correspondante. Dans l'embout, cette portion est prolongée par un canal 26 également en vé, dont la section transverse est par exemple triangulaire, comme on le voit sur la figure 6 qui est la coupe A1-A1 de la figure 4, et va en augmentant à partir de ladite portion, de telle manière qu'en supposant la portion en vé 25 horizontale, le fond du canal 26 s'abaisse à partir de cette portion tandis que sa partie supérieure demeure horizontale, comme on le voit sur la figure 5 qui est une coupe longitudinale de la figure 4, et sur la figure 6. L'embout 24 est prolongé par un support creux 30. Ce support 30 comporte un conduit 31 raccordé au canal 26 et débouchant dans ce canal (figure 5), ainsi qu'une portion 33 en forme d'entonnoir, allant en s'évasant à partir du conduit 31.

A l'intérieur de cette portion 33 en forme d'entonnoir sont prévues une pluralité de cales 32 qui sont rangées suivant des plans parallèles et dont la taille va en augmentant lorsque l'on s'éloigne de l'embout. Chaque cale comporte une pluralité d'orifices coniques 34 dont le nombre est égal au nombre de fibres optiques mobiles associées au sélecteur et dont la taille augmente lorsque l'on s'éloigne de l'embout, ces orifices étant agencés de façon former des guides ou "filières" pour les fibres optiques mobiles, comme on le voit sur la figure 4.

Les cales 32 sont par exemple réalisables par moulage d'une matière plastique.

Le support creux 30 est lui-même prolongé par un autre support 36 qui est destiné à accueillir les moyens de déplacement 37 associés au sélecteur, les bobines des moyens de déplacement étant fixées à l'autre support 36, respectivement en regard des orifices coniques 34 les plus éloignés de l'embout.

Les fibres optiques mobiles, respectivement fixées leurs tubes capillaires, convergent, par leurs filières respectives, en direction du conduit 31. Lorsqu'aucune liaison optique n'est établie avec la fibre $E_1$, les extrémités des fibres optiques mobiles destinées à cette liaison sont dans un même plan de coupe transversale du canal 26, au voisinage du conduit 31 par exemple. En outre, dans le conduit 31, les fibres sont très proches les unes des autres, un jeu étant prévu pour leur déplacement en direction du canal 26. Ainsi, lorsque les électroaimants associés à une même fibre optique mobile reliant les deux sélecteurs de la figure 4 sont activés simultanément par des moyens de commande 38, les extrémités de la fibre optique mobile se déplacent dans leurs canaux respectifs en direction des fibres optiques de transmission correspondantes, de manière à réaliser une liaison optique entre ces deux fibres de transmission.

Les fibres optiques mobiles sont montées successivement de la façon suivante : la fibre de transmission étant en place dans son embout, une fibre mobile est enfilée dans son tube capillaire, le moyen de déplacement qui lui est associé étant dans l'état correspondant à la connexion avec la fibre de transmission, puis cette fibre mobile est passée successivement à travers les différents orifices coniques qui lui sont associés, ceux-ci permettant l'orientation de la fibre mobile et sa progression jusqu'à ce qu'elle soit en contact avec la fibre de transmission. Lorsque la fibre mobile présente un léger flambage du fait de ce contact, cette fibre mobile est fixée à son tube capillaire par exemple par collage. Le moyen de déplacement correspondant est alors ramené à l'état dans lequel la connexion optique est supprimée et les autres fibres mobiles sont ensuite mises en place de la même manière.

On notera qu'une seule fibre optique mobile ou "jarretière" est capable d'assurer la liaison optique entre les deux fibres optiques de transmission de la figure 4, les autres fibres mobiles ayant des adressages différents vers d'autres sélecteurs, ces adressages respectant la configuration du commutateur considéré, à savoir la configuration du commutateur représenté sur la figure 3 dans l'exemple choisi.

On notera également que les moyens de déplacement utilisés dans l'invention sont extrêmement miniaturisables et que leur équipage mobile, comprenant le tube capillaire et les deux aimants permanents, est capable de se déplacer rapidement, en quelques millisecondes, par application d'une faible quantité de courant, pendant un temps très court, à la bobine.

La figure 5 est une vue de détail du canal 26 faisant partie des sélecteurs décrits en référence à la figure 4. On voit sur la figure 5 la connexion optique établie entre une fibre de transmission et l'une des fibres optiques mobiles correspondantes, cette connexion ayant lieu dans la portion en vé 25, après pénétration dans celle-ci de la fibre mobile, guidée par le canal 26.

La figure 6 est une vue en coupe transversale de l'embout 24 effectuée au voisinage de la jonction entre l'embout 24 et le conduit 31. On observe sur la figure 6, la section triangulaire du canal 26. En fait, sur la figure 6, on a représenté non pas quatre fibres optiques mobiles, mais 16, ce qui correspond à un autre mode de réalisation particulier du commutateur de l'invention.

Sur la figure 7, on a représenté schématiquement une vue en coupe transversale du support creux 30, effectuée au niveau de l'une des cales 32. On voit sur cette figure 7, les orifices coniques 34 permettant le passage des fibres optiques mobiles. On notera que la figure 7 correspond également à l'utilisation de 16 fibres optiques mobiles en concordance avec la figure 6.

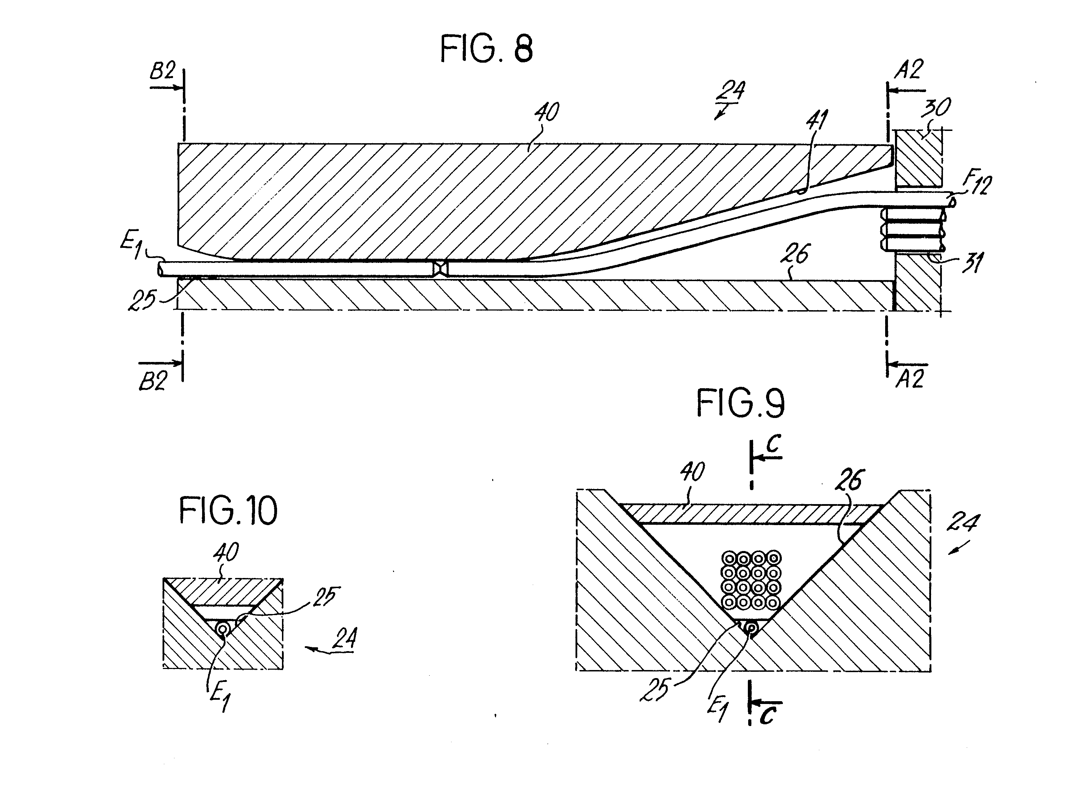

Sur la figure 8, qui est la coupe C-C de la figure 9, on a représenté schématiquement un autre mode de réalisation particulier de l'embout 24. La figure 9 est la coupe A2-A2 de la figure 8, effectuée au niveau de la jonction entre l'embout 24 et le support creux, et la figure 10 est la coupe B2-B2 de la figure 8, effectuée au niveau de l'extrémité de l'embout la plus éloignée du support creux.

On voit sur les figures 8 à 10 que le fond de la portion 25 est prolongé rectilignement par le fond du canal 26 et que l'embout comporte une pièce 40 qui vient fermer le vé de positionnement constitué par la portion 25 ainsi que le canal en vé 26. Cette pièce 40, en parcourant l'embout en direction du support creux 30, présente dans la portion 25, une surface plane 41 prévue pour appuyer sur la fibre de transmission et la maintenir en place dans son vé de positionnement, chaque fibre mobile étant apte à se glisser dans le logement défini par cette surface et le fond du vé. Comme on le voit sur la figure 8, ladite surface présente une pente au niveau du canal 26 et s'éloigne du fond de ce canal, la section transversale triangulaire de celui-ci allant en augmentant en direction du support creux 30, comm = dans le mode de réalisation décrit en référence à la figure 4.

On notera que l'on a considéré sur la figure 9 le cas d'un sélecteur à 16 fibres optiques mobiles.

Le conduit 31 peut avoir diverses formes :

sa section transversale est par exemple circulaire, carrée ou triangulaire, cette dernière forme permettant de réaliser des couches successives de 1, 3, 5, 7... fibres mobiles dans le conduit 31.

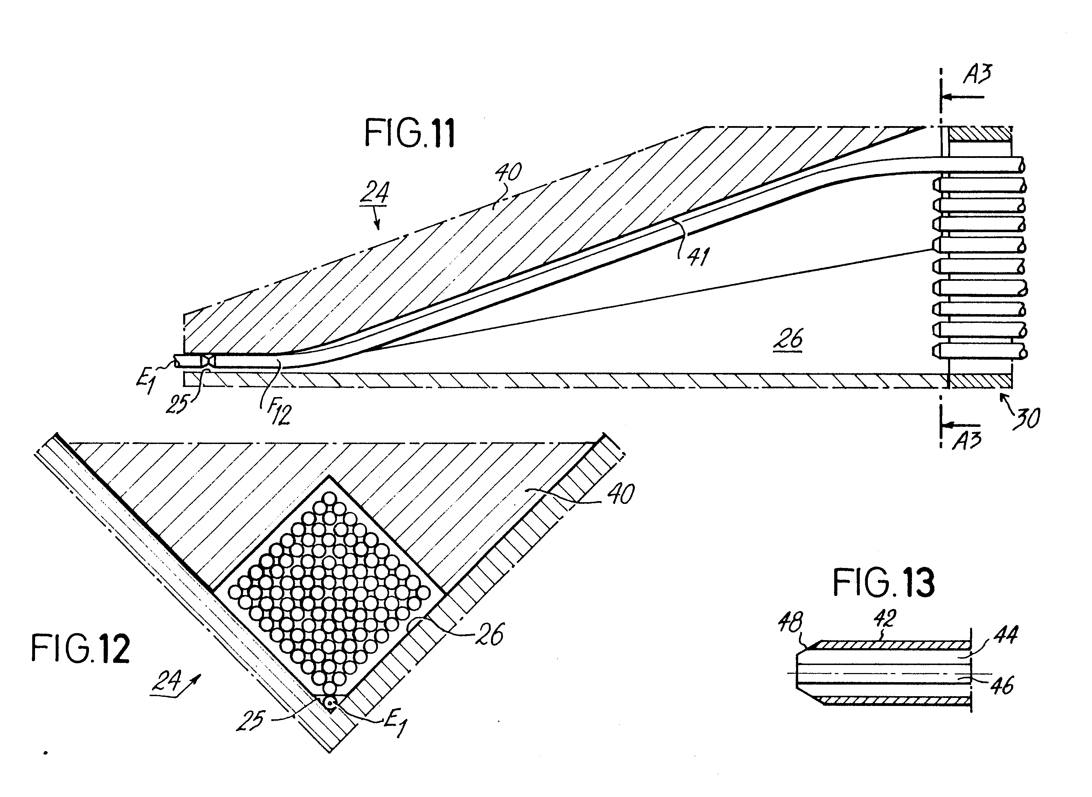

Sur la figure 11, on a représenté - schématiquement un autre mode de réalisation particulier de l'embout. La figure 12 est la coupe A3-A3 de la figure 11, effectuée au niveau de la jonction entre l'embout et le support creux 30. Dans cet autre mode de réalisation particulier, ladite surface de la pièce 40 présente la forme d'un vé inversé par rapport au vé de positionnement 25, et tel que les coupes transversales de l'embout, effectuées au niveau du canal 26 présentent la forme de carrés dont la surface va en augmentant en direction du support creux 30. De même, la section transversale du conduit 35 peut être carrée. On obtient ainsi, pour une même capacité du sélecteur, un meilleur remplissage du volume occupé par les fibres mobiles dont le nombre est supposé égal à 100 dans le mode de réalisation correspondant à la figure 11.

De préférence, au moins les extrémités des fibres mobiles quisont animées de mouvements alternatifs lorsque le commutateur fonctionne, sont protégées par un revêtement résistant 42 (figure 13) constitué de préférence par une ou plusieurs couches de nitrure de titane déposées sur la gaine de silice 44 des fibres, par un procédé expliqué dans le brevet français n° 2507387.

Le revêtement 42 est déposé de façon à conserver la concentricité du coeur 46 et de la gaine 44 des fibres mobiles. La coaxialité optique des coeurs des fibres mobiles et de transmission qui sont mises bout à bout est obtenue en prenant pour référence le diamètre externe finalement obtenu pour les fibres mobiles.

Afin de faciliter le fonctionnement du commutateur et d'éviter que les fibres mobiles n'usent par frottement le vé dans lequel elles se déplacent, il est préférable de former, à l'extrémité de connexion de ces fibres mobiles, un chanfrein 48 - (figure 13).

En outre, afin de favoriser la connexion optique, il est possible de remplir la cavité de l'embout 24 d'un liquide adaptateur d'indice.

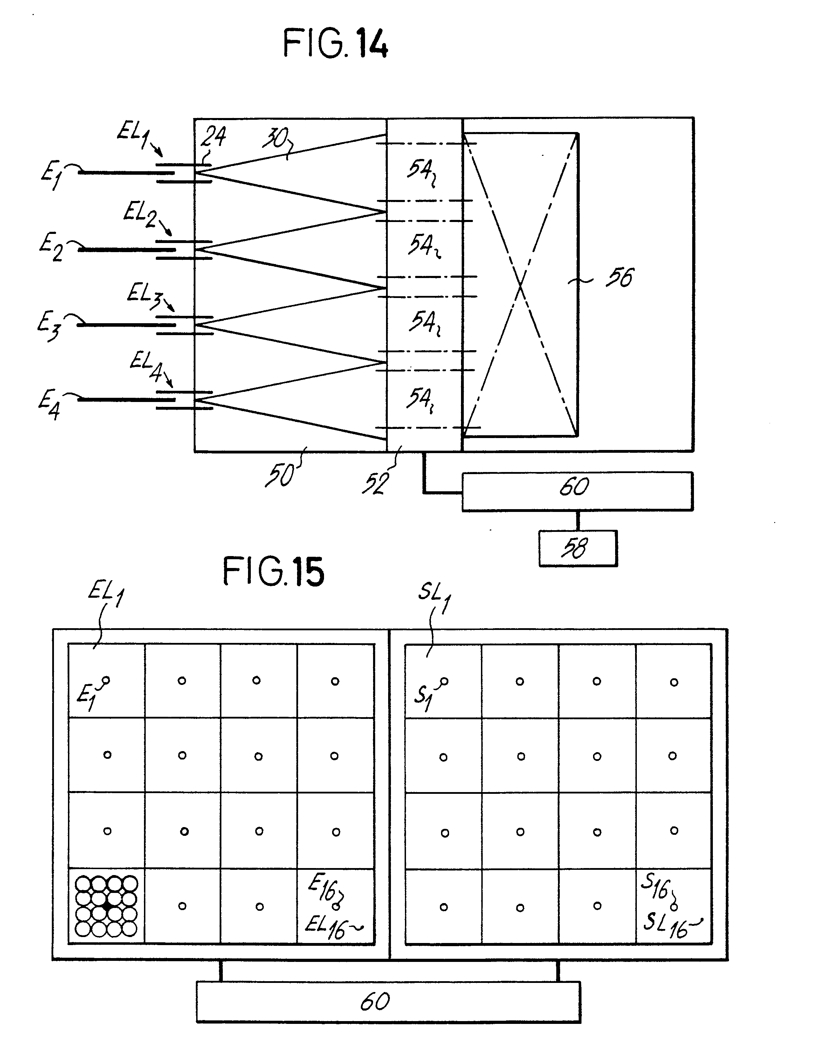

Sur les figures 14 et 15, on a représenté - schématiquement, respectivement en vue de profil et en vue de face, un commutateur optique conforme à l'invention, comporant 16 entrées et 16 sorties et du genre du commutateur de la figure 3. Sur la figure14, on observe 4 fibres d'entrée $E_1,..,E_4$ ainsi que leurs sélecteurs $EL_1$, ...,$EL_4$ Chaque sélecteur comporte un embout 24 suivi d'un support creux en forme d'entonnoir 30. Ces sélecteurs sont montés dans un boîtier 50 qui comporte également un emplacement 52 réservé aux moyens de déplacement bistables 54 correspondant aux sélecteurs. On voit également sur la figure 4 un emplacement 56 réservé au réseau de brassage formé par les différentes jarretières du commutateur, ainsi qu'une unité de commande 58 permettant d'appliquer aux moyens de déplacement des tensions appropriées, par l'intermédiaire d'une carte 60 comportant une matrice de diodes dont l'agencement sera indiqué par la suite.

Sur la figure 15, on observe les 16 sélecteurs d'entrée $EL_1$, ..., $EL_{16}$ ainsi que les 16 fibres optiques d'entrée correspondantes $E_1$, ..., $E_{16}$. On observe également les 16 sélecteurs de sortie $SL_1$, ..., $SL_{16}$ ainsi que les fibres optiques de sortie correspondantes $S_1$, ..., $S_{16}$.

Les différentes bobines des moyens de déplacement sont commandées par un système d'adressage matriciel pour éléments polarisés (en l'occurrence, les bobines des électro-aimants) connu en téléphonie, dans les systèmes de commutation électro-mécanique. Sur la figure 16, on a représenté schématiquement et partiellement ce système d'adressage réalisé au moyen de diodes. Dans le cas d'un commutateur à 16 entrées et 16 sorties, ce système d'adressage comporte une matrice à 256 lignes dont seule la première $L_1$ est représentée sur la figure 16, et 256 colonnes doubles, à deux conducteurs électriques, dont seule la première comportant les deux conducteurs $C_{1A}$ , $C_{1B}$, est représentée sur la figure 16. A l'intersection d'une ligne et d'une colonne double sont placées deux bobines 62 et 64 correspondant aux deux extrémités d'une fibre optique mobile. Ces deux bobines sont par exemple montées en série d'une manière appropriée à l'obtention du fonctionnement souhaité pour les moyens de déplacement dont elles font partie. L'une des extrémités du montage ainsi obtenu est reliée à la ligne en $A_1$ tandis que son autre extrémité $A_2$ est reliée par l'intermédiaire d'une diode 66 à un point $A_3$ de l'un

$C_{1A}$ des conducteurs de la colonne et, par l'intermédiaire d'une autre diode 68, à un point $A_4$ de l'autre conducteur $C_{1B}$ de la colonne, les deux diodes étant montées de façon à être tête-bêche.

Chaque ligne étant mise à la masse, l'un des états des deux électro-aimants correspondants est obtenu en appliquant une tension électrique positive $+U$ entre le conducteur $C_{1A}$ de la colonne correspondante et la ligne, et l'autre état est obtenu en appliquant une tension $-U$ opposée à la précédente, entre l'autre conducteur $C_{1B}$ de la colonne et la ligne.

Dans une variante de réalisation du système d'adressage matriciel (figure 17), les bobines sont montées en parallèle. Plus précisément, la bobine 62 (respectivement 64) est reliée par une extrémité $B_1$ (respectivement $B_2$) à la ligne. Par son autre extrémité $B_3$ (respectivement $B_4$), elle est reliée, par l'intermédiaire de la diode 66 (respectivement 68) au point $A_3$ du conducteur $C_{1A}$ de la colonne - (respectivement $A_4$ de l'autre conducteur $C_{1B}$ de la colonne), les points $B_3$ et $B_4$ étant reliés électriquement et les deux diodes étant toujours montées tête-bêche. Bien entendu, le montage en parallèle des bobines est réalisé d'une manière appropriée à l'obtention du fonctionnement souhaité pour les moyens de déplacement dont elles font partie.

Sur la figure 18, on a représenté - schématiquement un autre mode de réalisation particulier du commutateur objet de l'invention. Il permet l'obtention de liaisons optiques entre NxN fibres optiques d'entrée $E_1$, ..., $E_{NxN}$ et NxN fibres optiques de sortie $S_1$, ..., $S_{NxN}$. Dans l'exemple représenté sur la figure 18, on a supposé N égal à 4. Le commutateur comprend un étage d'extrémité ou étage d'entrée, un étage central ou intermédiaire et un autre étage d'extrémité ou étage de sortie. Chaque étage comprend N commutateurs à N entrées et N sorties du genre du commutateur 11 décrit en référence à la figure 3. Ces commutateurs sont référencés $C_{11}$, ..., $C_{N1}$ pour l'étage d'entrée, $C_{12}$, ..., $C_{N2}$ pour l'étage intermédiaire et $C_{13}$, ..., $C_{N3}$ pour l'étage de sortie. L'étage d'entrée et l'étage intermédiaire sont reliés par NxN fibres optiques référencées $J_1$, ..., $J_{NxN}$ tandis que l'étage intermédiaire et l'étage de sortie sont reliés par NxN fibres optiques référencées $K_1$, ..., $K_{NxN}$.

Le commutateur $C_{11}$ a N fibres d'entrée $E_1...E_N$ et N fibres de sortie $J_1...J_N$, etc... et le commutateur $C_{N1}$ a N fibres d'entrée $E_{(N-1)N+1}...E_{NxN}$ et N fibres de sortie $J_{(N-1)N+1}... J_{NxN}$.

De même, le commutateur $C_{13}$ a N fibres d'entrée $K_1$, ..., $K_N$ et N fibres de sortie $S_1$, ..., $S_N$, etc... et le commutateur $C_{N3}$ a N fibres d'entrée $K_{(N-1)N+1}$, ..., $K_{NxN}$ et N fibres de sortie $S_{(N-1)N+1}$, ..., $S_{NxN}$.

Enfin, comme on le voit sur la figure 18, la $j^{ième}$ fibre optique de sortie du commutateur $C_{i1}$, c'est-à-dire la fibre référencée $J_{N(i-1)+j}$, constitue la $i^{ième}$ fibre optique d'entrée du commutateur $C_{j2}$ et la $j^{ième}$ fibre optique d'entrée du commutateur $C_{i3}$, c'est-à-dire la fibre référencée $K_{N(i-1)+j}$, constitue la $i^{ième}$ fibre optique de sortie du commutateur $C_{j2}$.

Le commutateur représenté sur la figure 18 permet d'établir des liaisons optiques entre les NxN fibres optiques d'entrée et les NxN fibres optiques de sortie, sans blocage.

La miniaturisation des moyens de déplacement permet de réaliser des commutateurs très peu volumineux. Ainsi peut on réaliser un commutateur 4x4, 16x16, 36x36 ou 100x100 par exemple, avec une architecture en panneau (voir figure 15) de dimensions 4x8, 11x22, 22x44 ou 56x112 exprimées en centimètres, le point de commande d'une jarretière s'inscrivant dans un carré de 5mmx5mm.

## Revendications

1. Commutateur optique, caractérisé en ce qu'il comprend au moins une fibre optique mobile (6 ; $F_1$,...$F_{MN}$) dont les première et seconde extrémités sont destinées à être respectivement connectées optiquement à deux fibres optiques de transmission (2, 4 ; $E_1$...$E_M$, $S_1$...$S_N$) et sont respectivement pourvues de moyens de déplacement (8, 10), chaque moyen de déplacement étant apte à occuper une première position permettant la connexion entre l'extrémité et la fibre de transmission qui correspondent à ce moyen de déplacement, et une seconde position dans laquelle cette connexion est supprimée.

2. Commutateur selon la revendication 1, caractérisé en ce qu'il comprend en outre au moins un sélecteur optique ($EL_1$...$EL_M$, $SL_1$...$SL_N$) dans lequel s'effectue 1a connexion entre chaque fibre mobile et l'une des fibres de transmission.

3. Commutateur selon la revendication 2, caractérisé en ce qu'il comprend M groupes de N fibres optiques mobiles ($F_1$,...$F_{MN}$), M sélecteurs optiques ($EL_1$...$EL_M$) destinés à être respectivement associés à M fibres optiques de transmission ($E_1$...$E_M$) et N autres sélecteurs optiques ($SL_1$...$SL_N$) destinés à être respectivement associés à N autres fibres optiques de transmission ($S_1$...$S_N$), M et N étant des nombres entiers tels que M soit au moins égal à un et N au moins égal à M, en ce que chacun des M sélecteurs est associé aux premières extrémités des fibres optiques de l'un des M groupes et en ce que chacun des N autres sélecteurs est associé à la seconde extrémité de l'une des fibres optiques de ce groupe, de façon à pouvoir réaliser des liaisons optiques entre les M fibres de transmission et les N autres fibres de transmission.

4. Commutateur selon la revendication 2, caractérisé en ce qu'il comprend un étage central et deux étages d'extrémité comportant chacun N commutateurs optiques élémentaires ($C_{11}$, ..$C_{N1}$, $C_{12}$ ..$C_{N2}$, $C_{13}$...$C_{N3}$), chacun de ceux-ci comprenant N groupes de N fibres optiques mobiles, N sélecteurs et N autres sélecteurs, N étant un nombre entier au moins égal à un, chacun des N sélecteurs étant associé aux premières extrémités des fibres optiques de l'un des N groupes et chacun des N autres sélecteurs étant associé à la seconde extrémité de l'une des fibres optiques de ce groupe, en ce que chaque étage d'extrémité est destiné à être connecté à un groupe de NxN fibres optiques de transmission ($E_1$...$E_{NxN}$, $S_1$...$S_{NxN}$), en ce que chaque commutateur élémentaire ($C_{12}$...$C_{N2}$) de l'étage central est relié, d'un côté correspondant à un étage d'extrémité, à N fibres optiques intermédiaires ($J_1$,...$J_{NxN}$), et de l'autre côté correspondant à l'autre étage d'extrémité, à N autres fibres optiques intermédiaires ($K_1$...$K_{NxN}$) et en ce que chaque commutateur élémentaire ($C_{11}$...$C_{N1}$, $C_{13}$...$C_{N3}$) de chaque étage d'extrémité est associé à des fibres intermédiaires correspondant à des commutateurs élémentaires différents de l'étage central, de façon à pouvoir réaliser des liaisons optiques entre les deux groupes de NxN fibres optiques de transmission.

5. Commutateur selon l'une quelconque des revendications 2 à 4, caractérisé en ce que chaque sélecteur ($EL_1$...$EL_M$, $SL_1$...$SL_N$) comprend un embout évasé (24) destiné recevoir la fibre optique de transmission correspondante ($E_1$...$E_M$, $S_1$...$S_N$), cet embout étant prolongé par un support creux (30), évasé sensiblement à partir de l'embout et pourvu intérieurement de guides définis par des cales (32), chaque guide contenant une fibre optique mobile ($F_1$...$F_{MN}$) et permettant le déplacement de celle-ci en vue de son raccord à la fibre optique de transmission.

6. Commutateur selon l'une quelconque des revendications 1 à 5, caractérisé en ce qu'au moins les extrémités de chaque fibre optique mobile sont revêtues d'au moins une couche (42) de nitrure de titane.

7. Commutateur selon l'une quelconque des revendications 1 à 6, caractérisé en ce que chaque moyen de déplacement (8, 10) comprend :

-un électro-aimant fixe (14, 16) dont le noyau (14) est pourvu d'un perçage axial, et

-un élément amagnétique (18) apte à coulisser dans ce perçage et portant à ses extrémités deux aimants permanents (20, 22) présentant deux pôles de même nom en regard du noyau, la fibre optique mobile (6) correspondante étant fixée à cet élément, lesdites positions correspondant à des excitations opposées de l'électro-aimant.

# FIG.1A

# FIG.1B

# FIG.1C

# FIG.2

## FIG. 3

## FIG.18

# FIG. 4

# FIG. 5

FIG. 6

FIG.7

FIG.16

FIG.17

# FIG. 8

# FIG.9

# FIG.10

0 199 622

# FIG.11

24

40

41

26

E₁

25

F₁₂

A3

A3

30

# FIG.12

24

40

25

26

E₁

# FIG.13

48

42

44

46

0 199 622

0 199 622

## FIG.14

## FIG.15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENTS ABSTRACTS OF JAPAN, vol. 6, no. 225 (P-154) [1103] 10 novembre 1982, & JP - A - 57 125 904 (NIPPON DENSHIN DENWA KOSHA) 5-08-1982 * Abrégé; figures * | 1,2,7 | G 02 B 26/02 |
| A | PATENTS ABSTRACTS OF JAPAN, vol. 5, no. 69, (P-60) [741] 9 mai 1981, & JP - A - 56 19 005 (NIPPON DENKI K.K.) 23-02-1981 * Abrégé; figures * | 1,5,7 | |
| A | EP-A-0 127 871 (COMPAGNIE INDUSTRIELLE DES TELECOMMUNICATIONS CIT-ALCATEL) * Page 2, ligne 35 - page 4, ligne 7; figures 1,3,4 * | 1,3 | |
| A | FR-A-2 384 276 (FUJITSU LTD.) | | DOMAINES TECHNIQUES RECHERCHES (Int. Cl.4) G 02 B H 04 Q |

Le présent rapport de recherche a été établi pour toutes les revendications

| Lieu de la recherche | Date d'achèvement de la recherche | Examinateur |
|---|---|---|
| LA HAYE | 08-07-1986 | KEMSLEY E.E.K. |